# FASCICULE DE BREVET EUROPEEN

(11) **EP 3 018 017 B1**
(45) Date de publication et mention de la délivrance du brevet: **11.11.2020**
(21) Numéro de dépôt: 15190690.6
(22) Date de dépôt: 21.10.2015
(51) Int. Cl.: B60S 1/38, B60S 1/52

(54) **BALAI D'ESSUYAGE DE VITRES DE VÉHICULE AUTOMOBILE**
SCHEIBENWISCHERBLATT EINES KRAFTFAHRZEUGS
WIPER BLADE FOR MOTOR VEHICLE WINDSCREENS

(30) Priorité: 07.11.2014 FR 1460752
(43) Date de publication de la demande: 11.05.2016
(73) Titulaire: Valeo Systèmes d'Essuyage, 78322 Le Mesnil Saint Denis (FR)
(72) Inventeur: THEBAULT, Denis, 63000 Clermont Ferrand (FR); BARRET, Guillaume, 63270 LAPS (FR)
(74) Mandataire: Valeo Vision

(56) Documents cités:
- EP-A1- 3 012 164
- WO-A1-2006/088808
- WO-A1-2014/019627
- DE-A1-102005 054 142
- DE-A1-102007 050 171
- DE-A1-102011 050 104
- FR-A1- 2 923 785

## Description

L'invention a trait au domaine de l'essuyage des vitres, notamment pour des véhicules automobiles, et elle concerne plus particulièrement la structure des balais d'essuyage.

Certains balais d'essuyage comportent de façon connue des éléments de rigidification qui s'étendent longitudinalement le long du balai dans des cavités prévues à cet effet. Ces éléments de rigidification visent à assurer la tenue structurelle du balai, aussi bien pour la prise par un bras d'essuie-glace associé par l'intermédiaire d'un connecteur, que pour la tenue à l'effort du balai lors du balayage de la vitre. Il existe aujourd'hui une technologie de balai d'essuyage pour vitre de véhicule connue sous le nom de balai plat (ou Flat Blade en anglo-saxon) dont un exemple de réalisation est illustré sur la figure 1 et que l'on peut voir décrit dans la demande de brevet FR2923785 déposée par la demanderesse. Cette technologie balai plat consiste en une structure construite autour d'une pièce longitudinale monobloc formant un support en matériau plastique semi-rigide et flexible comportant, d'une part, une cavité dans laquelle est logée une tige de rigidification, généralement métallique, appelée également vertèbre, et, d'autre part, une griffe portant la lame d'essuyage en élastomère. Dans la demande de brevet précédemment citée, la pièce monobloc est solidaire d'un connecteur central permettant la liaison avec le mécanisme d'entraînement du balai.

Par ailleurs, les équipementiers visent de nos jours à intégrer des fonctions sur les balais d'essuyage et notamment des buses d'éjection de liquide de nettoyage pour remplacer les buses fixes disposées classiquement en partie inférieure du pare-brise. On connaît des balais munis de conduits externes rapportés sur la structure du balai et percés de trous d'éjection, les conduits étant solidaires du déplacement en va-et-vient du balai.

Le document WO 2014/019627 A1 montre un balai d'essuyage selon le préambule de la première revendication.

La présente invention s'inscrit dans ce double contexte de la présence d'un élément de rigidification du balai et de la présence d'un conduit de circulation de liquide de nettoyage embarqué sur le balai. Elle concerne un balai d'essuyage de vitres, notamment pour des vitres de véhicules automobiles, du type comportant une monture de support d'une lame d'essuyage apte à être au contact de la vitre à essuyer, une portion d'accroche de la lame qui sert au raccordement d'un connecteur de balai étant agencée entre la monture de support et la lame. Selon l'invention, la monture de support comporte au moins deux cavités distinctes qui s'étendent longitudinalement, lesdites au moins deux cavités étant distinctes en ce qu'au moins une première cavité reçoit un élément de rigidification et en ce qu'une deuxième cavité est adaptée à permettre la circulation de liquide entre un moyen d'arrivée de liquide et au moins un trou d'évacuation dudit liquide, qui peut notamment être formé dans une paroi de la deuxième cavité.

On propose ainsi un balai qui prévoit deux zones fonctionnelles distinctes pour d'une part la réalisation d'une fonction de tenue structurelle du balai et d'autre part la réalisation d'une fonction de projection de liquide de nettoyage embarquée sur le balai, le tout dans le volume du corps de balai, sans pénaliser l'encombrement ni l'esthétique de l'ensemble.

Selon l'invention, les première et deuxième cavités s'étendent dans l'épaisseur de la monture de support l'une au-dessus de l'autre, selon un axe vertical dans l'alignement de la lame d'essuyage. Et selon un mode de mise en œuvre préféré de l'invention, la première cavité est disposée au-dessous de la deuxième cavité, et l'on pourra prévoir dans ce cas que la première cavité présente une largeur supérieure à la largeur de la deuxième cavité. On comprend par largeur la dimension selon l'axe transversal à la fois perpendiculaire à l'axe longitudinal du balai et à l'axe vertical, sensiblement normal au plan de vitre à essuyer.

On pourra également prévoir que les largeurs des deux cavités sont sensiblement égales.

Selon un ensemble de caractéristiques de l'invention, le balai présente avantageusement une forme symétrique par rapport à un plan de symétrie longitudinal et vertical formant un plan vertical médian du balai, et les cavités distinctes sont disposées de manière à être centrées chacune sur le plan vertical médian du balai.

On pourra prévoir que la monture de support comporte plus d'une première cavité, notamment deux, chaque première cavité étant apte à loger un élément de rigidification distinct. Dans ce cas, les premières cavités peuvent être disposées dans la monture de support côte à côte, à la même hauteur.

Selon des caractéristiques de l'invention, au moins une des parois définissant longitudinalement la deuxième cavité est sensiblement verticale, et le ou les trous d'évacuation réalisé(s) dans cette paroi sensiblement verticale présentent une inclinaison, depuis l'intérieur de la deuxième cavité vers l'extérieur du balai, vers la vitre à essuyer.

La lame d'essuyage, réalisée en caoutchouc, comporte un talon qui est en prise sur la monture de support et une lèvre dont l'extrémité libre est apte à être en contact avec la vitre à essuyer.

On pourra prévoir que soit le talon est venu de matière avec la monture de support, soit la monture de support comporte un rail de maintien dans lequel le talon de la lame d'essuyage est apte à être enfilé, la lame d'essuyage et/ou la monture de support étant avantageusement obtenue par extrusion, par moulage ou par injection

L'invention concerne également un dispositif d'essuyage dans lequel un bras d'essuie-glace entraîné en rotation par des moyens motorisés porte par l'intermédiaire d'un connecteur un balai d'essuyage tel que décrit précédemment, ledit connecteur étant apte à saisir le balai au niveau de sa portion d'accroche.

D'autres caractéristiques et avantages de la présente invention apparaitront plus clairement à l'aide de la description et des dessins parmi lesquels :
- la figure 1 est une vue en perspective d'un balai d'essuyage sur lequel est rapporté en son centre un connecteur apte à assurer la liaison entre ledit balai et un bras d'essuie-glace non représenté ;
- les figures 2 et 3 sont des vues respectivement de face et en perspective, d'une coupe du balai d'essuyage selon un premier mode de réalisation de l'invention ;
- les figures 4 et 5 sont des vues respectivement de face et en perspective, d'une coupe du balai d'essuyage selon un deuxième mode de réalisation de l'invention ;
- la figure 6 est une vue de face d'une coupe du balai d'essuyage selon un troisième mode de réalisation ; et
- les figures 7 et 8 sont des schémas d'illustration d'une considération géométrique appliquée aux balais d'essuyage selon l'invention.

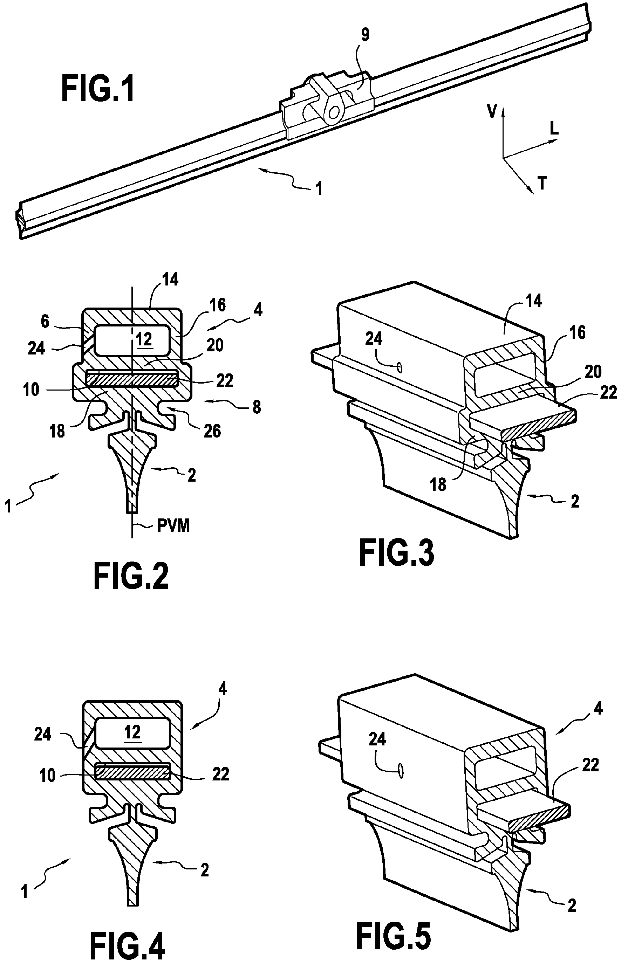

Dans la description qui va suivre et dans les revendications, on se réfèrera, à titre non limitatif, à l'orientation du trièdre L, V, T indiqué sur la figure 1 et qui correspond aux directions Longitudinale (direction principale du balai d'essuie-glace), Verticale et Transversale (étant entendu d'une part que dans la représentation faite, la direction Transversale correspond aussi à la référence horizontale, le balai étant illustré en position d'angle d'attaque nul, c'est-à-dire que la lame d'essuyage est en position de repos, non contrainte contre la vitre à essuyer, et étant entendu d'autre part que lorsque le balai est amené contre la vitre à essuyer, les directions Verticale et Transversale sont inclinées d'un angle correspondant à l'angle du pare-brise).

Un balai d'essuyage 1 selon l'invention comporte notamment une lame d'essuyage 2, dont une extrémité libre est apte à être plaquée contre la vitre à essuyer, et une monture de support 4 d'orientation principale longitudinale, qui comporte un corps central 6 et une portion d'accroche 8 de la lame.

Tel qu'illustré sur la figure 1, un tel type de balai est amené à être monté sur un bras d'essuie-glace (ici non représenté) par l'intermédiaire d'un connecteur 9 qui vient en prise sur le balai au niveau de la portion d'accroche de la lame sur la monture de support. On comprend que d'autres types de connecteurs que le connecteur central représenté pourraient être utilisés avec le balai selon l'invention.

On va décrire par la suite différents modes de réalisation d'un balai d'essuyage selon l'invention, et il convient de noter que des éléments et composants identiques, similaires ou analogues seront désignés par les mêmes références.

Selon l'invention, dans l'ensemble des modes de réalisation, le balai d'essuyage comporte une monture de support 4 spécifique en ce que le corps central comporte au moins deux cavités distinctes 10 et 12, logées dans l'épaisseur du corps.

Le corps présente une paroi supérieure 14, à l'opposé de la lame d'essuyage, deux parois latérales 16 qui prolongent sensiblement perpendiculairement la paroi supérieure en direction de la lame d'essuyage jusqu'à une paroi inférieure 18 sensiblement parallèle à la paroi supérieure. Le corps présente en outre une paroi centrale 20, parallèle aux parois supérieure et inférieure et qui est commune aux deux cavités formées dans l'épaisseur du corps.

Le corps central 6 présente une symétrie générale de conception par rapport au plan vertical médian PVM qui est aussi le plan de symétrie de la lame d'essuyage 2. Dans la suite, les termes de largeur, respectivement de hauteur, du corps correspondent aux distances séparant les deux parois latérales, respectivement les parois supérieure et inférieure.

Une première cavité 10 est réalisée longitudinalement, au moins partiellement le long de la monture, entre la paroi inférieure, les parois latérales et la paroi centrale, et elle présente des dimensions adaptées à permettre la réception d'un élément de rigidification 22, de type vertèbre plane flexible.

Une deuxième cavité 12 est également réalisée longitudinalement au moins partiellement le long de la monture de support, de façon distincte de la première cavité 10, entre la paroi centrale, les parois latérales et la paroi supérieure, et cette deuxième cavité est adaptée à permettre la circulation de liquide entre un moyen d'arrivée de liquide et au moins un trou d'évacuation 24 dudit liquide formé dans une des parois latérales 16 de ladite deuxième cavité. On comprend que le fait d'embarquer un dispositif de projection de liquide sur le balai est particulièrement intéressant lorsque plusieurs trous d'évacuation sont prévus en série le long du balai, et ce même si un seul trou d'évacuation est représenté sur les figures. Par ailleurs, il pourra être prévu de disposer des trous d'évacuation d'un côté ou de l'autre de la deuxième cavité, pour pouvoir projeter du liquide en amont de la lame d'essuyage quel que soit son sens de déplacement.

Tel que cela est visible sur les figures, il est notable que selon l'invention, les deux cavités s'étendent dans l'épaisseur de la monture de support au-dessus de la portion d'accroche 8, c'est-à-dire que la portion d'accroche s'étend entre l'extrémité libre de la lame d'essuyage et les premières et deuxièmes cavités.

L'élément de rigidification 22 consiste en une lame métallique souple, de section rectangulaire et avantageusement reçu à l'intérieur de la première cavité avec jeu, de manière à permettre de légers déplacements relatifs notamment selon la direction longitudinale. Il confère au balai son élasticité dans le plan vertical et longitudinal lui permettant de s'adapter à la conformation, et notamment au galbe, de la face externe de la vitre à essuyer contre laquelle le balai est en appui.

La lame d'essuyage est constituée par un profilé souple en élastomère qui présente de façon connue une forme effilée, son extrémité libre étant apte à entrer en contact avec la surface, ici une vitre de véhicule automobile, à nettoyer.

Selon différents modes de réalisation, parmi lesquels trois sont représentés à titre d'exemple par la suite, on pourra faire varier la forme du corps de la monture de support ou la forme de la portion d'accroche, étant entendu que l'on conservera la présence d'au moins une première cavité logeant un élément de rigidification et d'une deuxième cavité formant canalisation de liquide d'essuyage.

Dans un premier mode de réalisation, illustré sur les figures 2 et 3, le corps central comporte une première cavité disposée verticalement sous une deuxième cavité, et l'on peut constater que la largeur de la première cavité est plus grande que la largeur de la deuxième cavité. Le corps de la monture présente un profil externe correspondant, avec une largeur plus importante dans sa moitié inférieure correspondant à la première cavité que dans sa moitié supérieure correspondant à la deuxième cavité. De la sorte, les parois latérales de la moitié inférieure dépassent transversalement des parois latérales de la moitié supérieure.

Chaque trou d'évacuation de liquide formé dans l'une des parois latérales est incliné par rapport à la direction transversale, de manière à ce que le liquide qui sorte de la deuxième cavité vers la vitre soit projeté vers le bas, l'extrémité du trou débouchant dans la deuxième cavité étant plus haute que l'extrémité du trou débouchant à l'extérieur du balai. L'inclinaison est calculée pour que le liquide soit correctement projeté en amont du balai lorsque celui-ci est en mouvement, et pour qu'un outil de perçage laser puisse venir réaliser l'opération avec l'angle de perçage adéquat sans que le laser soit gêné par une partie du corps central.

Dans la portion d'accroche, le corps central et la lame d'essuyage sont ici venus de matière. La largeur moindre de la lame assure un dégagement transversal 26 dans cette portion d'accroche qui offre une prise, notamment au niveau de la paroi inférieure du corps, au connecteur tel qu'il a été illustré à titre d'exemple sur la figure 1, la prise par le connecteur étant favorisée par l'extension transversale de la moitié inférieure du corps central.

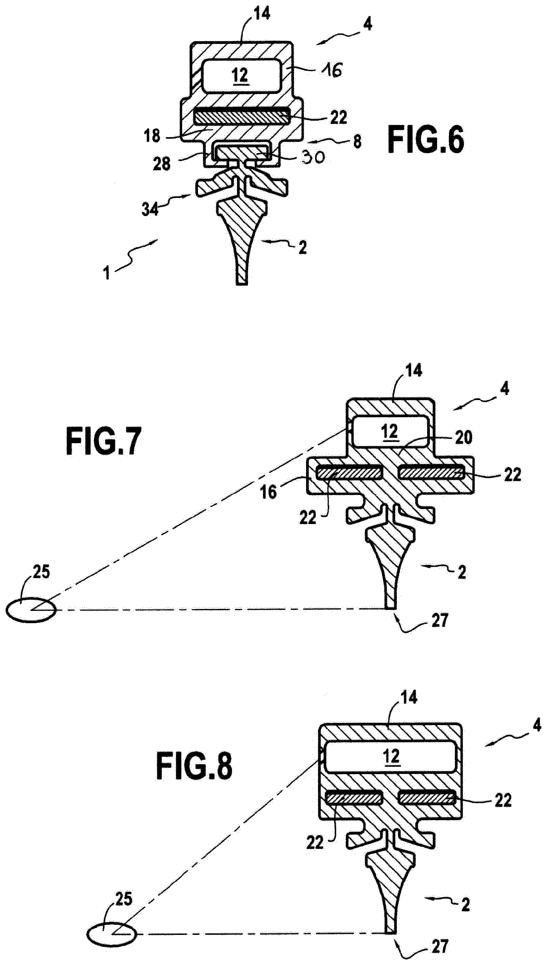

Dans un deuxième mode de réalisation, illustré sur les figures 4 et 5, on a cette fois prévu que la largeur de la première cavité 10 soit la même que la largeur de la deuxième cavité 12. Les parois latérales 16 du corps central 6 sont verticales. Outre une plus grande compacité transversale, le balai selon ce deuxième mode de réalisation permet de proposer des trous d'évacuation de liquide 24 dont l'inclinaison présente une composante plus verticale que l'inclinaison des trous d'évacuation dans le balai selon le premier mode de réalisation. Tel que cela est illustré sur les figures 7 et 8, on comprend que la présence d'une proéminence formée sur le corps entre le trou d'évacuation de liquide et la vitre à essuyer implique, du fait de l'encombrement de l'outil de perçage apte à réaliser le trou d'évacuation, d'incliner ce trou d'évacuation plus proche d'un plan longitudinal et transversal, de sorte que l'on éloigne le point d'impact 25 du liquide éjecté sur la vitre de la zone de contact 27 du balai avec la vitre.

On va maintenant décrire un troisième mode de réalisation, illustré sur la figure 6. Le balai diffère du premier mode de réalisation au niveau de la portion d'accroche. Là où la portion d'accroche consistait en la zone de jonction de la lame venue de matière avec le corps central, il s'agit ici d'une zone spécifique formée d'un rail de maintien 28 porté par le corps et dans lequel un talon 30 de la lame d'essuyage est apte à coulisser.

La lame d'essuyage est comme précédemment réalisée en caoutchouc ou en matériau élastomère naturel ou synthétique, par extrusion ou moulée. Elle comporte principalement un talon 30 et une lèvre 32 articulés entre eux par une partie intermédiaire de moindre section, formant charnière 24.

Le corps central se prolonge verticalement vers le bas sous sa face inférieure par des tronçons de deux nervures opposées à section en "L" formant crochets qui délimitent un rail de maintien 28 formant un logement de section rectangulaire dans lequel est reçu avec jeu le talon plein 30, de section rectangulaire, de la lame d'essuyage.

On comprend que dans ce cas, qui permet notamment de changer la lame d'essuyage lorsqu'elle est usagée sans changer l'intégralité du balai d'essuyage, le corps central peut être réalisé différemment de la lame d'essuyage, par exemple par moulage en matière plastique rigide ou semi-rigide, tandis que la lame est obtenue par extrusion, par moulage ou par injection.

Le balai d'essuyage peut comporter également un déflecteur ou spoiler aérodynamique supérieur, ici non représenté, dont la forme et la réalisation en matériau synthétique rigide ou souple permettent d'optimiser les performances aérodynamiques du balai. On saura prévoir des moyens de fixation du déflecteur sur la face externe de la paroi supérieure 14 du corps du balai.

Il a été précisé dans la description des différents modes de réalisation que les premières et deuxièmes cavités s'étendent longitudinalement dans l'axe du balai, et l'on peut comprendre qu'elles s'étendent de manière continue d'une extrémité longitudinale du balai à l'autre. Toutefois, on pourra imaginer, sans sortir du contexte de l'invention, que les premières et deuxièmes cavités s'étendent l'une au-dessus de l'autre sur une portion limitée du balai, notamment par le fait que la conduite de canalisation de liquide ne s'étende alors que sur une portion limitée du balai, en fonction par exemple de l'endroit où est situé le tuyau d'arrivée de liquide de nettoyage.

Dans un autre mode de réalisation, illustré sur les figures 7 et 8 utilisées précédemment pour expliquer le lien entre l'angle d'inclinaison du trou d'évacuation et la zone d'impact du liquide sur la vitre, on pourra prévoir que le corps central de la monture comporte plus d'une première cavité 10, et par exemple deux, chacune logeant un élément de rigidification distinct 22. Ces premières cavités peuvent être disposées l'une à côté de l'autre tel que cela est représenté, ou bien l'une au-dessus de l'autre, ces premières cavités pouvant dans ce dernier cas être disposées verticalement de part et d'autre de la deuxième cavité.

La description qui précède explique clairement comment l'invention permet d'atteindre les objectifs qu'elle s'est fixés et notamment de proposer un balai d'essuyage dans lequel on réalise deux cavités de réception pour y loger respectivement un premier élément ayant pour fonction de rigidifier l'ensemble du balai et permettre sa tenue par rapport au bras qui l'entraîne en déplacement le long de la vitre à essuyer, et un deuxième élément ayant pour fonction de permettre la circulation de liquide pour réaliser une fonction de projection de liquide sur la vitre qui est embarquée sur le balai.

Avantageusement, les deux cavités s'étendent dans l'épaisseur de la monture de support au-dessus de la portion d'accroche, c'est-à-dire que la portion d'accroche s'étend entre l'extrémité libre de la lame d'essuyage et les premières et deuxièmes cavités. Il est intéressant d'une part que les éléments de rigidification soient placés dans le corps central de la monture pour le maintien de l'ensemble malgré les contraintes renvoyées par la vitre, et il est intéressant d'autre part que la cavité formant conduite de circulation de liquide soit disposée au-delà de la portion d'accroche, pour que ces moyens d'éjection de liquide soient placés à une distance optimale de la vitre à essuyer, sans pour autant que l'angle d'éjection créé par l'angle de perçage n'empêche de projeter du liquide à proximité de la lame. On peut constater que dans chacun des modes de réalisation illustrés, la première cavité logeant l'élément de rigidification se situe au-dessous de la deuxième cavité formant canalisation de liquide. Dans une variante non représentée, on pourra prévoir que le corps de la monture comporte une première cavité disposée au-dessus de la deuxième cavité. On pourra trouver avantage dans cet agencement où les trous d'évacuation du liquide de nettoyage sont rapprochés de la vitre à essuyer, étant entendu que l'une et l'autre des cavités sont disposées au-dessus de la portion d'accroche.

Bien entendu, diverses modifications peuvent être apportées par l'homme du métier aux structures du balai d'essuyage, dès lors que l'on s'inscrit dans ce double contexte de la présence d'un élément de rigidification du balai et de la présence d'un conduit interne de circulation de liquide de nettoyage, et que l'on propose un balai qui prévoit deux zones fonctionnelles distinctes pour la réalisation de chacune de ces fonctions.

## Revendications

1. Balai d'essuyage de vitres, notamment pour des vitres de véhicules automobiles, du type comportant une monture de support (4) d'une lame d'essuyage (2) apte à être au contact de la vitre à essuyer, une portion d'accroche (8) de la lame qui sert au raccordement d'un connecteur de balai étant agencée entre la monture de support et la lame,
la monture de support comporte au moins deux cavités distinctes qui s'étendent longitudinalement, lesdites au moins deux cavités étant distinctes en ce qu'au moins une première cavité (10) reçoit un élément de rigidification (22) et en ce qu' une deuxième cavité (12) est adaptée à permettre la circulation de liquide entre un moyen d'arrivée de liquide et au moins un trou d'évacuation (24) dudit liquide, la première cavité (10) étant réalisée longitudinalement, au moins partiellement le long de la monture, entre une paroi inférieure, des parois latérales et une paroi centrale, le balai d'essuyage étant **caractérisé en ce qu'**au moins une des parois définissant longitudinalement la deuxième cavité est sensiblement verticale, le au moins un trou d'évacuation (24) étant réalisé dans ladite paroi sensiblement verticale en présentant une inclinaison, depuis l'intérieur de la deuxième cavité vers l'extérieur du balai, vers la vitre à essuyer.

2. Balai d'essuyage selon la revendication 1, **caractérisé en ce que** les première (10) et deuxième (12) cavités s'étendent dans la monture de support (4) l'une au-dessus de l'autre, selon un axe vertical dans l'alignement de la lame d'essuyage (2).

3. Balai d'essuyage selon la revendication 2, **caractérisé en ce que** la première cavité (10) est disposée au-dessus de la deuxième cavité (12).

4. Balai d'essuyage selon l'une des revendications précédentes, **caractérisé en ce que** la première cavité présente une largeur supérieure à la largeur de la deuxième cavité.

5. Balai d'essuyage selon l'une des revendications 1 à 3, **caractérisé en ce que** les largeurs des deux cavités (10, 12) sont sensiblement égales.

6. Balai d'essuyage selon l'une des revendications précédentes, **caractérisé en ce qu'**il présente une forme symétrique par rapport à un plan de symétrie longitudinal et vertical, formant un plan vertical médian (PVM) du balai.

7. Balai d'essuyage selon la revendication précédente, **caractérisé en ce que** les cavités distinctes (10, 12) sont disposées de manière à être centrées chacune sur le plan vertical médian du balai (PVM).

8. Balai d'essuyage selon l'une des revendications précédentes, **caractérisé en ce que** la monture de support comporte plus d'une première cavité (10), notamment deux, chaque première cavité étant apte à loger un élément de rigidification distinct (22).

9. Balai d'essuyage selon la revendication précédente, **caractérisé en ce que** les premières cavités (10) sont disposées dans la monture de support côte à côte, à la même hauteur.

10. Balai d'essuyage selon l'une des revendications précédentes, **caractérisé en ce que** le trou d'évacuation (24) dudit liquide est formé dans une paroi (16) de ladite deuxième cavité.

11. Balai d'essuyage selon l'une des revendications précédentes, **caractérisé en ce que** la lame d'essuyage (2) comporte une lèvre d'essuyage (32) en caoutchouc, dont l'extrémité libre est apte à être en contact avec la vitre à essuyer, et un talon (30) en prise sur la monture de support (4).

12. Balai d'essuyage selon la revendication précédente, **caractérisé en ce que** le talon (30) est venu de matière avec la monture de support (4).

13. Balai d'essuyage selon la revendication 12, **caractérisé en ce que** la monture de support (4) comporte un rail de maintien (28) dans lequel le talon (30) est apte à être enfilé.

14. Balai d'essuyage selon la revendication précédente, **caractérisé en ce que** la lame d'essuyage (2) et/ou la monture de support (4) est obtenue par extrusion, injection ou par moulage.

15. Dispositif d'essuyage dans lequel un bras d'essuie-glace entraîné en rotation par des moyens motorisés porte par l'intermédiaire d'un connecteur (9) un balai d'essuyage (1) selon l'une des revendications 1 à 14, ledit connecteur étant apte à saisir le balai au niveau de sa portion d'accroche (8) de la lame.

## Patentansprüche

1. Scheibenwischerblatt, insbesondere für Fensterscheiben von Kraftfahrzeugen, des Typs, welcher einen Stützrahmen (4) für einen Wischergummi (2) aufweist, der geeignet ist, sich mit der zu wischenden Scheibe in Kontakt zu befinden, wobei ein Anhängeabschnitt (8) für den Wischergummi, welcher zum Anschluss eines Wischerblattverbinders dient, zwischen dem Stützrahmen und dem Wischergummi angeordnet ist, wobei der Stützrahmen wenigstens zwei verschiedene Hohlräume aufweist, welche sich in Längsrichtung erstrecken, wobei sich diese wenigstens zwei Hohlräume darin unterscheiden, das wenigstens ein erster Hohlraum (10) ein Versteifungselement (22) aufnimmt, und darin, dass ein zweiter Hohlraum (12) dafür eingerichtet ist, das Strömen von Flüssigkeit zwischen einem Flüssigkeitseintrittsmittel und wenigstens einem Loch zum Auslassen (24) der Flüssigkeit zu ermöglichen,
wobei der erste Hohlraum (10) in Längsrichtung, wenigstens teilweise entlang des Rahmens, zwischen einer unteren Wand, Seitenwänden und einer mittleren Wand ausgebildet ist, wobei das Wischerblatt **dadurch gekennzeichnet ist, dass** wenigstens eine der Wände, die den zweiten Hohlraum in Längsrichtung definieren, im Wesentlichen vertikal ist, wobei das wenigstens eine Auslassloch (24) in dieser im Wesentlichen vertikalen Wand ausgebildet ist, wobei es eine Neigung vom Inneren des zweiten Hohlraums zur Außenseite des Wischerblattes, zu der zu wischenden Scheibe hin aufweist.

2. Wischerblatt nach Anspruch 1, **dadurch gekennzeichnet, dass** sich der erste (10) und der zweite (12) Hohlraum in dem Stützrahmen (4) übereinander, entlang einer vertikalen Achse mit dem Wischergummi (2) fluchtend, erstrecken.

3. Wischerblatt nach Anspruch 2, **dadurch gekennzeichnet, dass** der erste Hohlraum (10) oberhalb des zweiten Hohlraums (12) angeordnet ist.

4. Wischerblatt nach einem der vorhergehenden Ansprüche, **dadurch gekennzeichnet, dass** der erste Hohlraum eine Breite aufweist, die größer als die Breite des zweiten Hohlraums ist.

5. Wischerblatt nach einem der Ansprüche 1 bis 3, **dadurch gekennzeichnet, dass** die Breiten der zwei Hohlräume (10, 12) im Wesentlichen gleich sind.

6. Wischerblatt nach einem der vorhergehenden Ansprüche, **dadurch gekennzeichnet, dass** es eine symmetrische Form bezüglich einer längs verlaufenden und vertikalen Symmetrieebene aufweist, die eine vertikale Mittelebene (PVM) des Wischerblattes bildet.

7. Wischerblatt nach dem vorhergehenden Anspruch, **dadurch gekennzeichnet, dass** die verschiedenen Hohlräume (10, 12) so angeordnet sind, dass sie jeweils um die vertikale Mittelebene des Wischerblattes (PVM) zentriert sind.

8. Wischerblatt nach einem der vorhergehenden Ansprüche, **dadurch gekennzeichnet, dass** der Stützrahmen mehr als einen ersten Hohlraum (10) aufweist, insbesondere zwei, wobei jeder erste Hohlraum geeignet ist, ein anderes Versteifungselement (22) aufzunehmen.

9. Wischerblatt nach dem vorhergehenden Anspruch, **dadurch gekennzeichnet, dass** die ersten Hohlräume (10) in dem Stützrahmen nebeneinander auf derselben Höhe angeordnet sind.

10. Wischerblatt nach einem der vorhergehenden Ansprüche, **dadurch gekennzeichnet, dass** das Loch zum Auslassen (24) der Flüssigkeit in einer Wand (16) des zweiten Hohlraums ausgebildet ist.

11. Wischerblatt nach einem der vorhergehenden Ansprüche, **dadurch gekennzeichnet, dass** der Wischergummi (2) eine Wischlippe (32) aus Gummi, deren freies Ende geeignet ist, sich mit der zu wischenden Scheibe in Kontakt zu befinden, und einen Steg (30), der mit dem Stützrahmen (4) in Eingriff steht, aufweist.

12. Wischerblatt nach dem vorhergehenden Anspruch, **dadurch gekennzeichnet, dass** der Steg (30) stoffschlüssig mit dem Stützrahmen (4) verbunden ist.

13. Wischerblatt nach Anspruch 12, **dadurch gekennzeichnet, dass** der Stützrahmen (4) eine Halteschiene (28) aufweist, in welche der Steg (30) eingeschoben werden kann.

14. Wischerblatt nach dem vorhergehenden Anspruch, **dadurch gekennzeichnet, dass** der Wischergummi (2) und/oder der Stützrahmen (4) durch Extrusion, Spritzgießen oder durch Formen hergestellt sind.

15. Wischvorrichtung, wobei ein Scheibenwischerarm, der durch motorisierte Mittel drehend angetrieben wird, über einen Verbinder (9) ein Wischerblatt (1) nach einem der Ansprüche 1 bis 14 trägt, wobei der Verbinder geeignet ist, das Wischerblatt an dessen Anhängeabschnitt (8) für den Wischergummi zu ergreifen.

## Claims

1. Windscreen wiper, in particular for motor vehicle windows, of the type having a support frame (4) for a wiper blade (2) able to be in contact with the window to be wiped, a coupling portion (8) for the blade, which serves to connect a wiper connector, being arranged between the support frame and the blade,
the support frame having at least two separate cavities that extend longitudinally, said at least two cavities being separate in that at least one first cavity (10) receives a stiffening element (22) and in that a second cavity (12) is designed to allow liquid to circulate between a liquid inlet means and at least one evacuation hole (24) for said liquid, the first cavity (10) being realized longitudinally, at least partially along the frame, between a lower wall, side walls and a central wall, the windscreen wiper being **characterized in that** at least one of the walls longitudinally defining the second cavity is substantially vertical, the at least one evacuation hole (24) being made in said substantially vertical wall, having an inclination, from the inside of the second cavity to the outside of the wiper, towards the window to be wiped.

2. Windscreen wiper according to Claim 1, **characterized in that** the first (10) and second cavities (12) extend one above the other in the support frame (4), along a vertical axis in the alignment of the wiper blade (2).

3. Windscreen wiper according to Claim 2, **characterized in that** the first cavity (10) is disposed above the second cavity (12).

4. Windscreen wiper according to one of the preceding claims, **characterized in that** the first cavity has a width greater than the width of the second cavity.

5. Windscreen wiper according to one of Claims 1 to 3, **characterized in that** the widths of the two cavities (10, 12) are more or less the same.

6. Windscreen wiper according to one of the preceding claims, **characterized in that** it has a symmetric shape with respect to a longitudinal and vertical plane of symmetry, forming a median vertical plane (PVM) of the wiper.

7. Windscreen wiper according to the preceding claim, **characterized in that** the separate cavities (10, 12) are disposed so as each to be centred on the median vertical plane (PVM) of the wiper.

8. Windscreen wiper according to one of the preceding claims, **characterized in that** the support frame has more than one first cavity (10), in particular two, each first cavity being able to house a separate stiffening element (22) .

9. Windscreen wiper according to the preceding claim, **characterized in that** the first cavities (10) are disposed in the support frame side by side, at the same height.

10. Windscreen wiper according to one of the preceding claims, **characterized in that** the evacuation hole (24) for said liquid is formed in a wall (16) of said second cavity.

11. Windscreen wiper according to one of the preceding claims, **characterized in that** the wiper blade (2) has a wiping lip (32) made of rubber, the free end of which is able to be in contact with the window to be wiped, and a heel (30) engaged with the support frame (4).

12. Windscreen wiper according to the preceding claim, **characterized in that** the heel (30) is formed integrally with the support frame (4).

13. Windscreen wiper according to Claim 12, **characterized in that** the support frame (4) has a holding rail (28) in which the heel (30) is able to be inserted.

14. Windscreen wiper according to the preceding claim, **characterized in that** the wiper blade (2) and/or the support frame (4) is produced by extrusion, injection-moulding or moulding.

15. Wiping device in which a windscreen wiper arm driven in rotation by motor-driven means carries a windscreen wiper (1) according to one of Claims 1 to 14 via a connector (9), said connector being able to grip the wiper at its coupling portion (8) for the blade.
